# EUROPÄISCHE PATENTSCHRIFT

(11) **EP 1 333 277 B1**
(45) Veröffentlichungstag und Bekanntmachung des Hinweises auf die Patenterteilung: **08.09.2010**
(21) Anmeldenummer: 03001421.1
(22) Anmeldetag: 22.01.2003
(51) Int. Cl.: G01N 29/26

(54) **Verfahren und Vorrichtung zum Untersuchen von Rohrleitungen mit Ultraschall-Gruppenstrahlern**
Method and apparatus for investigating pipes with ultrasonic phased array sensors
Procédure et appareil pour examiner des conduites par de réseaux en phase ultrasonores

(30) Priorität: 22.01.2002 DE 10202432
(43) Veröffentlichungstag der Anmeldung: 06.08.2003
(73) Patentinhaber: PII Pipetronix GmbH, 76297 Stutensee (DE)
(72) Erfinder: Krieg, Wolfgang, 76199 Karlsruhe (DE); Hugger, Achim, 76149 Karlsruhe (DE)
(74) Vertreter: Lempert, Jost

(56) Entgegenhaltungen:
- EP-A- 0 255 619
- US-A- 5 329 930
- US-A- 5 454 267
- VOS H C L ET AL: "An ultrasonic circular array transducer for pipeline and borehole inspection" ULTRASONICS SYMPOSIUM 1988, 2. Oktober 1988 (1988-10-02), Seiten 659-662, XP010075531

## Beschreibung

Die Erfindung betrifft ein Verfahren zum Prüfen von Rohrleitungen nach dem Oberbegriff des Anspruchs 1 bzw. 10.

Bei verlegten Rohrleitungen ist regelmäßig eine automatische zerstörungsfreie Prüfung hinsichtlich Korrosion, Lochfraß oder dergleichen erforderlich. Derartige Fehler können durch von ihnen bewirkte Änderungen der Dicke der Rohrwandung und deren physikalischer Eigenschaften festgestellt werden.

In der Regel werden bei senkrechter Einstrahlung in die Pipelinewandung die Laufzeitdifferenzen zwischen an einer Innen- und einer Außenwand sowie an fehlerhaften Stellen der Rohrleitung reflektierten Signalen gemessen, die Messergebnisse mit einer Wegstreckeninformation versehen, gegebenenfalls für eine Auswertung nach Durchführung des Messlaufs zwischengespeichert und/oder online ausgewertet. Eine gattungsgemäße Vorrichtung ist dabei in der Regel in einem Gerät zum Durchfahren der Rohrleitung mit einem Teilkörper derselben verbunden, der wenigstens ein druckfestes Gehäuse zur Aufnahme von Einrichtungen für die Messwertverarbeitung und -aufzeichnung sowie für die Stromversorgung aufweist.

Aus der EP 0 271 670 B2 ist ein Verfahren zur Detektion von Korrosion oder dergleichen an Rohrleitungen bekannt, bei dem eine mittels eines Geräts zum Durchfahren einer Rohrleitung (Molch) durch dieselbe bewegte Vorrichtung zum Prüfen der Rohrwandung Ultraschallsignale aussendet, deren Laufzeitdifferenz zwischen einer Reflektion an der Innen- bzw. der Außenwand der Rohrleitung gemessen wird. Aus der Differenz beider Laufzeiten lässt sich die Dicke der Rohrwandung bestimmen. Kleine Pittings können kaum erfasst werden.

Zum Aussenden der Ultraschallsignale ist aus der EP 0 255 619 B1 bei einer durch eine Rohrleitung bewegten Vorrichtung zum Prüfen derselben bekannt, diese mit einem kreisförmigen Träger für Ultraschallmessköpfe auszustatten, die in regelmäßigen Abständen über den Umfang des Trägers angeordnet sind und bezüglich ihrer Sensorflächen stets eine senkrechte Winkellage zur Rohrwandungs-Normalen einnehmen.

Beim vorstehend beschriebenen Stand der Technik ist insbesondere als nachteilig anzusehen, dass mit einem solchen Verfahren bzw. einer solchen Vorrichtung nur Korrosion und Lochfraß nicht aber Risse festgestellt werden können. Zum Feststellen von zur Oberseite eines Rohres reichenden Rissen ist eine Schrägeinstrahlung und damit ein zusätzlicher Lauf mit einem Molch mit anders ausgerichteten Sensoren notwendig. Hiermit können auch nur die bis zur Oberfläche der Rohrwandung reichenden Risse detektiert werden, nicht aber im Inneren der Wandung befindlichen Risse.

Die US 5,454,267 zeigt eine Ultraschall-Sensoranordnung zum elektronischen Scannen der Innenseiten einer Rohrwandung, wobei die gesamte Anordnung mit einem von einer Trommel abwickelbaren Kabel getragen ist und damit nur eine Leitung, wie eine Bohrlochleitung endlicher Länge, überprüfen kann. Hinter einem Führungskopf sind gegebenenfalls mehrere Wandlerkörper vorgesehen, bei denen einzelne gestreckte Wandlerelemente auf dem festen Umfang des Wandlerkörpers angeordnet sind, so dass der gesamte Innenumfang der Rohrwandung abgedeckt werden kann. Abgesehen davon, dass die Wandler einen erheblichen Abstand von der Rohrwandung aufweisen und bei dieser Ausgestaltung aufweisen müssen, so dass die empfange Signalstärke und damit die Auflösung gering ist, können mit dieser bekannten Vorrichtung lediglich endliche Rohre mit einem vorgegebenen festen Durchmesser überprüft werden, nicht aber lange Pipelines mit unterschiedlichen Rohrdurchmessern, Verengungen aufgrund von Klappen, Ventilen oder dergleichen, wie diese bei solchen Pipelines üblich sind.

In der Druckschrift Vos et al. ist zwar die Untersuchung von Pipelines angesprochen, die dortige Vorrichtung ist aber lediglich zur Untersuchung eines endlichen Bohrlochs oder aber von kurzen Rohrleitungen, wie eines Kernkraftwerks. Beim Gegenstand dieser Druckschrift werden Untergruppen von Wandlerelementen gleichzeitig aktiviert, um ein gemischtes Strahlungsmuster zu erzeugen, wobei eine Phasenverschiebung aufgrund der Krümmung des Rohrteils durch geeignete elektronische Verzögerungen der Wandlerelemente einer Untergruppe kompensiert wird.

Die US 3,820,387 (D3) zeigt eine Anreihung von einzelnen Sensorelementen. Ein Teil der Gesamtheit der einzelnen Sensorelemente ist zusammengefasst und wird gleichzeitig befeuert und eine andere Unteranzahl von Elementen, von denen eine sich mit der vorherigen Unteranzahl überlappt, wird in einer weiteren Folge befeuert, so dass durch diese Unteranzahlen "virtuelle" Sensoren gebildet werden. Das Vorgehen dient dazu, die Testeffizienz zu erhöhen, ohne die relative Geschwindigkeit zwischen den Proben und dem Testobjekt zu erhöhen.

Der Erfindung liegt daher die Aufgabe zugrunde, ein Verfahren und eine Vorrichtung zum Prüfen von Rohrleitungen zu schaffen, mit denen bei einfachem Aufbau der Vorrichtung neben oberflächlicher Korrosion und Lochfraß auch Risse und insbesondere im Inneren der Rohrwandung befindliche Risse sicher in einem Messdurchgang detektiert werden.

Diese Aufgabe wird erfindungsgemäß bei einem Verfahren der eingangs genannten Art durch die kennzeichnenden Merkmale des Anspruchs 1 sowie durch eine gattungsgemäße Vorrichtung mit dem kennzeichnenden Merkmal des Anspruchs 10 gelöst.

Reihung der Wandlerelemente heißt nicht, dass die Gruppenstrahler gebogen sein müssen oder zur Abdeckung über den Umfang zusammen angeordnet sind - sie können auch eben ausgebildet sein und zur Abdeckung über den Umfang hin zueinander geneigt angeordnet sein. Die Gruppenstrahler (Sensor-Arrays) sind durch eine Reihe von einzelnen Wandlerelementen aus piezo-elektrischen Kristallen, wie vorzugsweise 16 bis 256 Wandlerelemente, in einem gemeinsamen Gehäuse gebildet und weisen vorzugsweise eine Krümmung in Umfangsrichtung auf, die der Krümmung der zu untersuchenden Rohrwandung entspricht. Die einzelnen Wandlerelemente haben in Reihungsrichtung (Umfangsrichtung) vorzugsweise eine Breite von 0,3 bis 2,5 mm, senkrecht zur Reihungsrichtung kann ihre Erstreckung größer sein. Bei einem 24-Zoll-Rohr werden beispielsweise etwa 6.400 Wandlerelemente in einer geeigneten Anzahl von Gruppenstrahlern über den gesamten Umfang hin vorgegeben, wobei die Gruppenstrahler in zwei in Erstreckungsrichtung der Rohrwandung nebeneinander angeordneten Ringen in Umfangsrichtung zueinander versetzt, aneinander teilweise überlappend angeordnet sein können.

Die Anregungsfrequenz der Wandlerelemente liegt vorzugsweise im Bereich von 1,0 bis 2,5 MHz, typischerweise bei 5 MHz. Durch die gemeinsame oder gruppenweise Ansteuerung einer gewählten Teilmenge oder Auswahl einzelner Wandlerelemente werden erfindungsgemäß Ultraschallstrahlen strahlendynamisch synthetisiert und so virtuelle Sensoren geschaffen. Gemeinsame oder gruppenmäßige Ansteuerung heißt dabei nicht notwendigerweise gleichzeitige Ansteuerung (wenn eine solche zur Synthetisierung eines senkrecht abgestrahlen Ultraschallstrahls auch nicht ausgeschlossen ist), sondern beinhaltet auch eine zeitlich sequenzielle Ansteuerung der Wandlerelemente eines virtuellen Sensors (als Gruppe oder Teilmenge sämtlicher Elemente eines Gruppenstrahlers), um so insbesondere durch geeignete Phasensteuerung der Ultraschallwellen der einzelnen Wandlerelemente eines virtuellen Sensors Ultraschallstrahlen mit einer zur Messfläche eines solchen phasengesteuerten Gruppenstrahlers geneigten Wellenfront und damit einer von der Senkrechtabstrahlung abweichenden Strahlrichtung zu schaffen. Synthetisierung von Ultraschallstrahlen beinhaltet die Bündelung von Schallwellenfronten gleicher Schallenergie bzw. mit Schallenergie oberhalb einer Nutzschwelle in einem engeren Differenzbereich gegenüber beispielsweise der sich teilkreisförmig ausbreitenden Welle eines einzelnen Wandlers mit im gesamten Raumbereich gleicher Schallenergie der (teilkreisförmigen) Wellenfront. Ultraschall-Strahlenbildung beinhaltet also einen Summeneffekt der Überlagerung (Indifferenz) der Schallwellen der einzelnen einen virtuellen Sensor bildenden Wandlerelemente oder, wie gesagt, eine dynamische Synthese, wobei, wie ebenfalls gesagt, derartige dynamische synthetisierte Ultraschall-Strahlen durch zeitlich versetzte Ansteuerung in eine von der Senkrecht-Abstrahlung abweichende Richtung gerichtet werden können.

Durch die Erfindung wird somit erreicht, dass durch Senkrecht- und Schrägeinstrahlung, letztere in zwei Richtungen, sowohl Korrosion und Lochfraß als auch Risse und insbesondere auch Risse innerhalb der Rohrwandung, erfasst werden können, durch die Reihung der Wandlerelemente in Umfangsrichtung insbesondere von Längsfeldern, wie Längsrissen, wobei hierdurch auch eine genauere Angabe der Umfangsposition gegeben ist. Die Detektion von Korrosion und Lochfraß erfolgt und mittels Feststellung von Laufunterschieden, da derartige Veränderungen der Rohrwandung auch eine Veränderung der Laufzeitunterschiede bedingten. Dabei kann die Größe der Teilmenge der gemeinsam angesteuerten Wandlerelemente und damit des virtuellen Sensors variiert werden, so dass hierdurch auch (kleine) Pittings detektiert werden können. Die Detektion von bis zur Oberseite der Wandung reichenden Rissen erfolgt aufgrund des dort gegebenen Winkelspiegeleffektes mittels des Puls-Echo-Verfahrens durch die gleiche Detektorkombination, wohingegen die Detektion von im Inneren der Wandung befindlichen Rissen im Durchschaltungsverfahren durch von der Sendewandler-Kombination verschiedene Wandler erfolgt. Dabei ist auch eine bessere Tiefenabschätzung gegeben.

Im Rahmen der Erfindung wird die Anwendung eines Ultraschall-Prüfverfahrens unter Verwendung von sogenannten Gruppenstrahlern oder Phased Arrays zur Werkstoffprüfung in Rohrleitungen vorgeschlagen, wobei durch die zeitlich variable individuelle Ansteuerung einzelner Wandlerelemente eine Teilmenge (oder auch aller) der Wandlerelemente eines Gruppenstrahlers eine umfassende hochaufgelöste Werkstoffprüfung ermöglicht wird. Durch eine für jeden Gruppenstrahler vorzugsweise vorhandene individuell federnde Sensoraufhängung zur Ankopplung an die Innenwand der Rohrleitung ist darüber hinaus eine gleichbleibende Qualität des in die Rohrwandung eingestrahlten Signals und eine definierte Lage der Gruppenstrahler relativ zur Rohrwandung erreichbar. Das ist insbesondere beim Arbeiten innerhalb von Rohrleitungen, die über große Strecken in der Regel Ovalitäten, Beulen oder sonstige Unrundheiten aufweisen, von entscheidender Bedeutung.

In bevorzugter Ausführung werden einzelne Wandlerelemente der Gruppenstrahler, insbesondere einzelne Wandlerelemente einer einen virtuellen Sensor bildenden Teilgruppe von Wandlerelementen eines Gruppenstrahlers, in geeigneter Weise zeitlich versetzt angesteuert, so dass eine Ausbreitungsrichtung und/oder eine Fokussierungstiefe des ausgesandten Messimpulses in Umfangsrichtung bzw. in radialer Richtung veränderbar ist. Auf diese Weise lassen sich mit jedem Gruppenstrahler eine Vielzahl von Signaleinstrahlungen in die Rohrwandung unter verschiedenen Einstrahlwinkeln realisieren, deren Eindringverhalten in die Rohrwandung in einen weitem Bereich an die Messanforderungen anpassbar ist.

Vorzugsweise erfolgt die Signalabstrahlung und -detektion in einem endlichen Abstand zur Rohrinnenwand, so dass eine Beschädigung der Gruppenstrahler durch Unebenheiten der Rohrwandung ausgeschlossen ist.

Um zuverlässige und reproduzierbare Messergebnisse zu erzielen, ist weiterhin vorgesehen, dass der Signalabstrahlungs-Abstand, d.h. der Abstand zwischen einem Gruppenstrahler und der Innenwand der Rohrleitung während des Messlaufs im wesentlichen konstant gehalten wird.

Da die Detektierung im Inneren der Rohrwandung vorhandener Risse zuverlässig nur bei schräger Signaleinstrahlung bezogen auf eine Normale der Rohrwandung durchführbar ist, sieht die Erfindung in einer weiteren Ausgestaltung vor, dass eine Richtung der Signalabstrahlung bezogen auf eine Normale der Rohrwandung bei schräger Signalabstrahlung derart gewählt wird, dass sich die Schallwelle nach Brechung an einer Grenzfläche zwischen Rohrinnenraum und Rohrwandung unter einem Winkel von ungefähr 45° bezogen auf die Rohrwandungs-Normale ausbreitet. Durch einen solchen Strahlverlauf innerhalb der Rohrwandung ist sichergestellt, dass es bei Reflektion der Schallwelle an der Rohraußenwand oder -innenwand im wesentlichen zu einer totalen Reflektion der Schallwelle kommt, bei der der einfallende und der reflektierte Strahl einen Winkel von 90° zueinander einnehmen und bei der kein nach außen in die Umgebung gebrochener Strahl existiert, so dass ein Großteil der eingestrahlten Schallenergie in Richtung des Rohrinnenraums bzw. der Rohrinnenwand zurückgestrahlt wird. Auf diese Weise lässt sich die zur Durchführung des Prüfverfahrens benötigte akustische Energie minimieren.

Da sich Risse nicht immer zuverlässig von einer Seite feststellen lassen, was beispielsweise dann der Fall ist, wenn sich der Riss in der Nähe einer Rohrwandungsnaht befindet, muss eine Einstrahlung von beiden Seiten her erfolgen. Dazu ist erfindungsgemäß vorgesehen, dass das Signal unter einem ersten Winkel und unter einem zweiten Winkel abgestrahlt wird, wobei sich der zweite Winkel durch Spiegelung des ersten Winkels an der Rohrwandungs-Normalen ergibt.

Vorzugsweise sind die einzelnen Wandlerelemente eines Gruppenstrahlers in Form einer linearen Reihung oder eines linearen Arrays angeordnet, wobei die Erstreckungsrichtung des Arrays senkrecht zu den Sensorflächen, d.h. den signalabstrahlenden bzw. schallempfindlichen Flächen der Wandlerelemente liegt. Bei einer besonders vorteilhaften Ausgestaltung der Erfindung weisen die Sensorarrays in Erstreckungsrichtung eine an die Krümmung der Rohrwandung angepasste endliche Krümmung auf. Auf diese Weise ist für jedes einzelne Wandlerelement ein im wesentlichen identischer Abstand zur Rohrinnenwand erreichbar.

Damit es im Zuge der individuell federnden Ankopplung der Gruppenstrahler an die Rohrwandung nicht zu Kollisionen zwischen benachbarten Gruppenstrahlern kommt, sieht die Erfindung in bevorzugter Ausführung vor, dass eine Mehrzahl von Gruppenstrahlern als Gruppe in Umfangsrichtung voneinander beabstandet bei einer gemeinsamen axialen Position. angeordnet sind. Vorzugsweise sind dabei die Wandlerelemente einer Gruppe von Gruppenstrahlern auf einem zum Innenumfang der Rohrwandung konzentrischen Kreis angeordnet. Um eine in Umfangsrichtung vollständige Signalabdeckung der Rohrwandung zu gewährleisten, kann eine Mehrzahl von in axialer Richtung gegeneinander versetzten Gruppen von Gruppenstrahlern vorgesehen sein, die sich in Umfangsrichtung teilweise überlappen. Das Maß der Überlappung in Umfangsrichtung ist dabei so zu wählen, dass in Verbindung mit der vorstehend beschriebenen schrägen Signalabstrahlung eine vollständige Signalabdeckung der Rohrwandung in Umfangsrichtung erfolgt.

Zur Erreichung einer vollständigen Signalabdeckung der Rohrwandung ist weiterhin vorgesehen, dass zur Abstrahlung von Signalen wiederholt nacheinander verschiedene Teilbereiche (virtuelle Sensoren) der Gruppenstrahler angesteuert werden, die sich insbesondere aus einer jeweils gleichen Anzahl von Wandlerelementen zusammensetzen, so dass scheinbar ein abstrahlender Teilbereich der Gruppenstrahler zeitlich längs des Gruppenstrahlers verschoben wird, bis alle Wandlerelemente jedes einzelnen Gruppenstrahlers wenigstens einmal aktiviert wurden. Durch ein derartiges Aufteilen der Gruppenstrahler in virtuelle Untereinheiten und das vorstehend beschriebene virtuelle Verschieben dieser Einheiten lässt sich die Rohrwandung in einem gewissen Bereich im Umfangsrichtung abscannen.

Aufgrund der Anordnung der Gruppenstrahler in Umfangsrichtung der Rohrwandung ist in vorteilhafter Weise darüber hinaus sichergestellt, dass auch bei schräger Signalabstrahlung das an der Rohrinnenwand oder der Rohraußenwand reflektierte Signal durch einen Teilbereich des aussendenden Gruppenstrahlers detektierbar ist, der jedoch im Allgemeinen nicht mit dem Teilbereich identisch sein wird, von dem das Signal ausgesandt wurde. Durch die vorstehend beschriebene versetzt-überlappende Anordnung einer Mehrzahl von Gruppenstrahlern ist erfindungsgemäß eine vollständige Signalabdeckung der Rohrwandung in Umfangsrichtung durch die gesamte Abstrahlung aller Teilbereiche oder virtuelle Sensoren aller Gruppenstrahler erreichbar.

Nach dem vorstehenden ergibt sich die vollständige Signalabdeckung der Rohrwand aufgrund einer festen geometrischen Anordnung der Gruppenstrahler. Nach einer weiteren bevorzugten Ausführung der Erfindung kann auch vorgesehen sein, dass die Gruppenstrahler zum Erreichen der vollständigen Signalabdeckung der Rohrwandung im Umfangsrichtung der Rohrleitung rotierbar sind. Bei einer solchen Ausgestaltung der Erfindung weist diese lediglich eine bei einer bestimmten, aufgrund der Bewegung der Vorrichtung zeitlich veränderlichen axialen Position angeordnete Gruppe von Gruppenstrahlern auf, die in Umfangsrichtung voneinander beabstandet sind. Die Sensoren rotieren als Gruppe um die Rohrachse und werden zugleich aufgrund der axialen Bewegung des Molches in axialer Richtung weiterbewegt, so dass es bei geeignet gewählter Rotationsgeschwindigkeit zur vollständigen Signalabdeckung der Rohrwandung kommt.

Zur Befestigung der Gruppenstrahler ist in bevorzugter Ausführung der Erfindung vorgesehen, dass der Sensorträger wenigstens ein koaxial zu den Gruppenstrahlern angeordnetes, zentrales kreiszylinderförmiges Mittelelement aufweist. Zum Zweck einer axialen Führung der Vorrichtung in der Rohrleitung und zur Gewährleistung einer ausreichenden Stabilität gegen Kippen kann der Sensorträger eine konzentrisch zur Längsachse angeordnete, zumindest in ihrem Randbereich flexible Führungsscheibe mit kreisförmigem Querschnitt aufweisen, deren größter Durchmesser einem Innendurchmesser der Rohrleitung entspricht oder diesen leicht übersteigt. Eine derart ausgebildete Führungsscheibe liegt während des Laufs der Vorrichtung jederzeit formschlüssig an der Innenwand der Rohrleitung an und passt sich aufgrund seiner im Randbereich flexiblen Ausbildung auch an die regelmäßig auftretenden Unrundheiten der Rohrleitung an, so dass eine sichere Führung der Sensoranordnung gewährleistet ist. Zum Zwecke ausreichender Verschleißfestigkeit ist erfindungsgemäß vorgesehen, dass die Führungsscheibe aus einem geeigneten Kunststoff, insbesondere aus Polyurethan besteht.

In bevorzugter Ausführung der Erfindung ist zur Sicherstellung der flexiblen individuellen Ankopplung der Gruppenstrahler an die Innenwandung der Rohrleitung vorgesehen, dass die Sensoraufhängung der einzelnen Gruppenstrahler aus mindestens zwei Gelenkarmen besteht, die in gelenkiger Verbindung stehen und die mit ihrem jeweils freien Ende an einem Befestigungselement einer den Gruppenstrahler aufnehmenden Sensorkufe bzw. am Mittelelement des Sensorträgers angelenkt sind. Dabei können die Gelenkverbindungen vorzugsweise als Drehgelenke ausgebildet sein. Auf diese Weise sind die einzelnen Gruppenstrahler in radialer und axialer Richtung gegenüber der Rohrinnenwand verschiebbar, wo hingegen die Position in Umfangsrichtung relativ starr festgelegt ist.

Um eine federnde Ankopplung der Gruppenstrahler an die Rohrwandung zu gewährleisten und zugleich ein Springen der gelenkigen Sensoraufhängung an Unrundheiten der Rohrleitung, beispielsweise an Beulen, zu verhindern und insbesondere radiale Schwingbewegungen der Sensoraufhängung zu vermeiden, ist erfindungsgemäß weiterhin vorgesehen, dass der am Mittelelement angelenkte Gelenkarm als Teleskop-Federelement mit zusätzlichen dämpfenden Eigenschaften ausgebildet ist. Zur Verbesserung der federnden und dämpfenden Eigenschaften kann darüber hinaus vorgesehen sein, dass zwischen Sensorkufe und Elementen der Sensoraufhängung ein weiteres Teleskop-Federelement angeordnet ist.

Die Sensorkufe dient der Aufnahme der arrayförmigen Gruppenstrahler und ist demgemäß vorzugsweise derart ausgebildet, dass eine Krümmung der der Rohrinnenwand zugewandten Oberfläche der Sensorkufen in Umfangsrichtung im wesentlichen der Krümmung der Gruppenstrahler entspricht. In weiterer Ausgestaltung der Erfindung weisen die Sensorkufen eine in Umfangsrichtung in der Oberfläche verlaufende Nut auf, in die die Gruppenstrahler eingepasst sind, wobei die Tiefe der Nut im wesentlichen einer Abmessung des Gruppenstrahlers in radialer Richtung entspricht. Nach einer weiteren bevorzugten Ausführung der erfindungsgemäßen Vorrichtung weisen die Sensorkufen gegenüber einer axialen Abmessung der Gruppenstrahler ein Übermaß auf, in dessen Bereich in äußerst bevorzugter Ausführung Abstandshalter angeordnet sind. Auf diese Weise lässt sich ein fester endlicher Abstand der Gruppenstrahler zur Innenwand der Rohrleitung gewährleisten, was einerseits der Qualität der Messergebnisse, andererseits dem Schutz der Gruppenstrahler insbesondere vor mechanischen Schadeinwirkungen dient. Gemäß einem weiteren Merkmal weist das erfindungsgemäß ausgebildete Gerät auf der der Rohrwandung zugewandten Oberseite der Abstandshalter einen Verschleißschutz auf, was einer verlängerten Standzeit der Erfindung zuträglich ist. Der Verschleißschutz kann beispielsweise aus verschleißarmem Kunststoff, z.B. Polyuhrethan, bestehen.

Die erfindungsgemäße Werkstoffprüfung an Rohrleitungen geschieht vorzugsweise unter Verwendung longitudinaler Ultraschallwellen. In äußerst bevorzugter Ausgestaltung der Erfindung können zur Werkstoffprüfung auch Transversalwellen eingesetzt werden. Auf diese Weise ist die gesamte Vielfalt der Möglichkeiten der Signaleinstrahlung und der Signalausbreitung in Rohrwandungen zu Prüfzwecken nutzbar, was zu einer sicheren Detektierung von Materialfehlern führt, die bei Nichterkennen katastrophale Folgen nach sich ziehen können.

Nachstehend ist die Erfindung anhand von in der Zeichnung wiedergegebenen Ausführungsbeispielen beschrieben. Dabei zeigt:
- Fig. 1: eine Seitenansicht eines Geräts zum Durchfahren einer Rohrleitung mit einer erfindungsgemäßen Vorrichtung zum Prüfen derselben;
- Fig. 2: eine perspektivische Ansicht einer erfindungsgemäßen Vorrichtung zum Prüfen von Rohrleitungen;
- Fig. 3a: eine schematische Darstellung der Erzeugung einer sich senkrecht zu einer Sensorfläche ausbreitenden Schallwellenfront;
- Fig. 3b: in einer schematischen Darstellung die Erzeugung einer sich schräg zu einer Sensorfläche ausbreitenden Schallwellenfront;
- Fig. 4a: in einer schematischen Darstellung die Unterteilung eines erfindungsgemäßen Sensors in einzelne Teilbereiche (virtuelle Sensoren);
- Fig. 4b: in einer schematischen Darstellung verschiedene mögliche Schall-Abstrahlungsrichtungen eines virtuellen Sensors;
- Fig. 5: in einer schematischen Schnittansicht die Anordnung der erfindungsgemäßen Gruppenstrahler innerhalb einer Rohrleitung;
- Fig. 6a: in einer schematischen Darstellung den Schalllaufweg in einer Rohrwandung ohne Riss;
- Fig. 6b: in einer schematischen Darstellung die Schalllaufwege in einer Rohrwandung mit Riss; und
- Fig. 7: in einer schematischen Darstellung die Laufwege der zu einer Detektierung eines Risses, insbesondere zur Risstiefenabschätzung, nutzbaren Schallsignale.

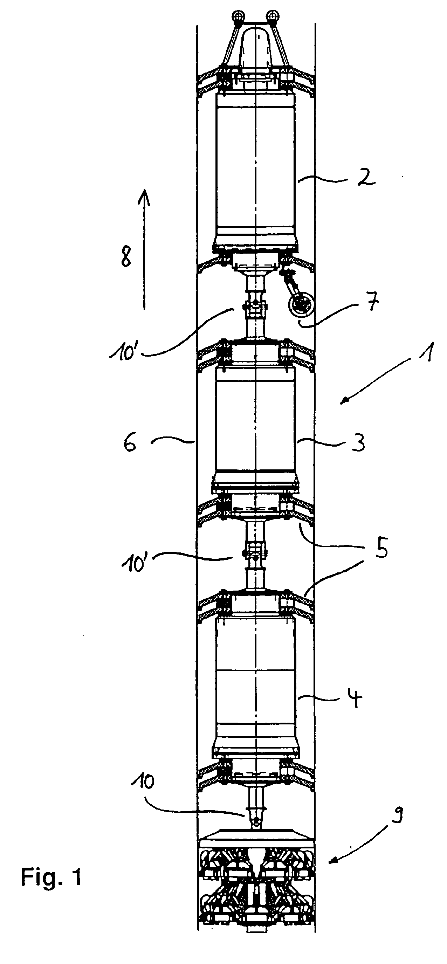

Ein Gerät zum Durchfahren einer Rohrleitung, kurz Molch 1 genannt, weist in der in Figur 1 gezeigten Ausführungsform drei hintereinander angeordnete druckfeste Gehäuse 2,3,4 auf. Die Gehäuse 2,3,4 sind mit mehreren Manschetten 5 versehen, die innenseitig an der Rohrleitung 6 anliegen und mit Hilfe des in der Rohrleitung geförderten Mediums für den Vortrieb des Molchs 1 sorgen. In dem Gehäuse 2 befinden sich beispielsweise Batterien für die elektrische Versorgung des Geräts. Darüber hinaus weist das Gehäuse 2 mindestens eine Rolle 7 als Odometerrad zur Wegstreckenmessung auf. Das zweite Gehäuse 2 weist Einrichtungen zur Datenverarbeitung und -aufzeichnung auf, während das in Bewegungsrichtung 8 des Geräts letzte Gehäuse 4 eine Messelektronik für die nachfolgend beschriebene Sensor-Vorrichtung enthält.

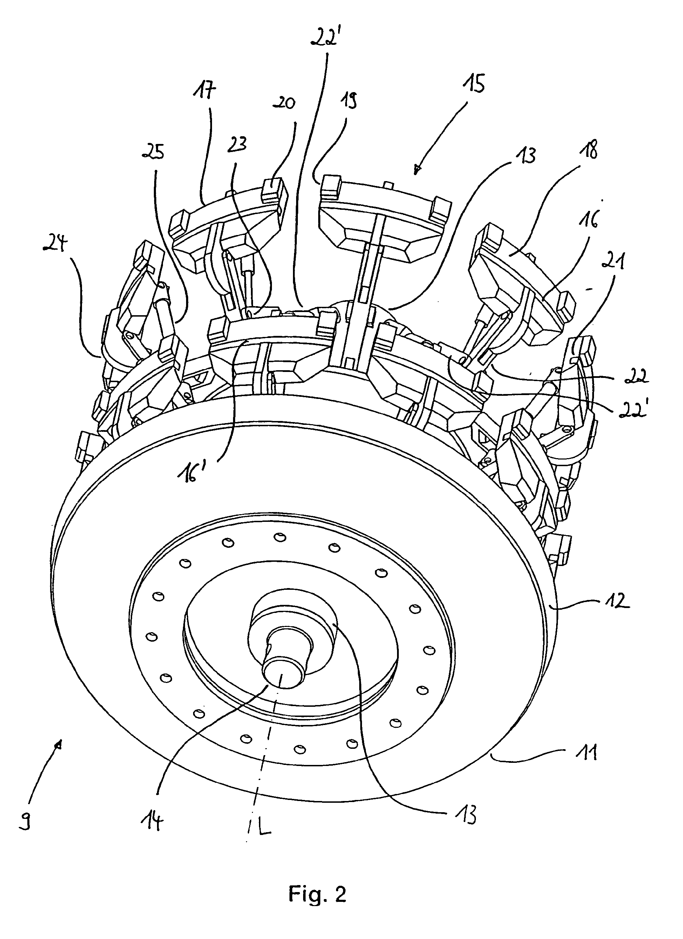

Bei dem in Figur 1 gezeigten Ausführungsbeispiel ist am nachlaufenden Ende des Molches 1 ein erfindungsgemäße Vorrichtung 9 zum Prüfen von Rohrleitungen mit einem Sensorträger und mit von diesem getragenen Gruppenstrahler 16, 16' (Fig. 2) angehängt. Die einzelnen Gehäuse 2,3,4 sowie der Sensorträger sind untereinander über Gelenke 10, 10' miteinander verbunden.

In Figur 2 ist die erfindungsgemäße Untersuchungs-Vorrichtung 9 perspektivisch darstellt. Sie weist an ihrer Vorderseite eine Führungsscheibe 11 auf, die zumindest in ihrem Randbereich 12 elastisch ausgebildet ist und vorzugsweise aus Polyurethan besteht. Die Führungsscheibe 11 ist am einen Ende eines zylinderstabförmigen Mittelelements 13 angeordnet, das am selben Ende ein Gelenkelement 14 aufweist, das zur Schaffung einer gelenkigen Verbindung mit einem passenden Gegenstück des Gehäuses 4 ausgebildet ist.

Um das Mittelelement 13 herum sind in zwei Ebenen eine Mehrzahl von Sensoraufhängungen 15 angeordnet. Die Sensoraufhängungen 15 umfassen jeweils eine zur Aufnahme der Gruppenstrahler 16,16' dienende Sensorkufe 17. Die Gruppenstrahler 16,16' sind in zwei axial aufeinanderfolgenden, sich über den Umfang erstreckenden Gruppen angeordnet, wobei die Gruppenstrahler 16 der einen Gruppe mit den Gruppenstrahler 16' der anderen Gruppe in Umfangsrichtung teilweise überlapppen, damit auch unabhängig von einem unterschiedlichen Rohrdurchmesser eine vollständige Abdeckung des gesamten Umfangs der Rohrwandung durch Gruppenstrahler 16,16' sichergestellt ist. Die Sensorkufen 17 sind mit einer an die Krümmung der Rohrwandung angepassten Oberfläche 18 ausgebildet, die in axialer Richtung, d.h. in Richtung der Längsachse L der Anordnung ein Übermaß gegenüber der entsprechenden Erstreckung der Gruppenstrahler 16, 16' aufweist. Im Bereich dieses Übermaßes sind auf der gekrümmten Oberfläche 18 der Sensorkufen 17 Abstandshalter 19 angeordnet, die auf ihrer Oberseite 20 einen Verschleißschutz besitzen. Die Gruppenstrahler 16,16' sind in den Sensorkufen 17 in einer auf der Oberseite der Sensorkufen angebrachten Nut 21 gehalten, wobei sich Gruppenstrahler 16, 16' und Nuten 21 im wesentlichen in Umfangsrichtung erstrecken.

Des weiteren weisen die Sensoraufhängungen 15 zwei Gelenkarme 22, 22' zur Schaffung einer gelenkigen Befestigung der Sensorkufe 17 am Mittelelement 13 auf. Die Gelenkarme 22, 22' sind untereinander mittels eines Drehgelenks 23 verbunden und mit ihrem jeweiligen freien Ende einerseits an einem an der Sensorkufe 17 angeordneten Befestigungselement 24, andererseits am Mittelelement 13 der Anordnung angelenkt. Zwischen der Unterseite der Sensorkufe 17 und dem unteren Gelenkarm 22' der Sensoraufhängung 15 ist zur Schaffung einer individuellen, gedämpft-federnden Ankopplung der Sensorkufe 17 an die Innenwand der Rohrleitung 6 ein Teleskop-Federelement 25 vorgesehen. Beim gezeigten Ausführungsbeispiel ist zusätzlich auch der untere Gelenkarm 22' als Teleskop-Federelement ausgebildet.

Aufgrund ihrer dämpfenden und federnden Eigenschaften sorgen die Sensoraufhängungen 15 für einen definierten, während eines Messlaufs im wesentlichen konstanten Abstand der Gruppenstrahler 16,16' zur Innenwand der Rohrleitung 6. Dabei liegen die Gruppenstrahler 16,16' nicht direkt auf der Innenwand der Rohrleitung 6 an, sondern werden durch die Abstandhalter 19 in einem gewissen endlichen Abstand gehalten. Die Gruppenstrahler 16,16' selbst und die sie aufnehmenden Sensorkufen 17 sind so geformt, dass sie die Krümmung der Rohrwandung aufnehmen.

Wie aus Figur 2 ersichtlich ist, sind die Gruppenstrahler 16,16' in zwei Gruppen jeweils längs eines zentrisch zur Achse L angeordneten Kreises angeordnet, wobei die Gruppenstrahler 16,16' innerhalb einer Gruppe jeweils in Umfangsrichtung voneinander beabstandet sind, um Kollisionen von Gruppenstrahlern 16,16', beispielsweise an Querschnittsverengungen, auszuschließen. Die Gruppenstrahler 16,16' verschiedener Kreisanordnungen sind dabei relativ zueinander jeweils "auf Lücke" angeordnet, so dass eine vollständige Sensorabdeckung in Umfangsrichtung erreicht ist. Die Gruppenstrahler senden Ultraschall über eine radial gerichtete Schmalseite aus und empfangen über diese von der Rohrwandung gestreute Ultraschallsignale.

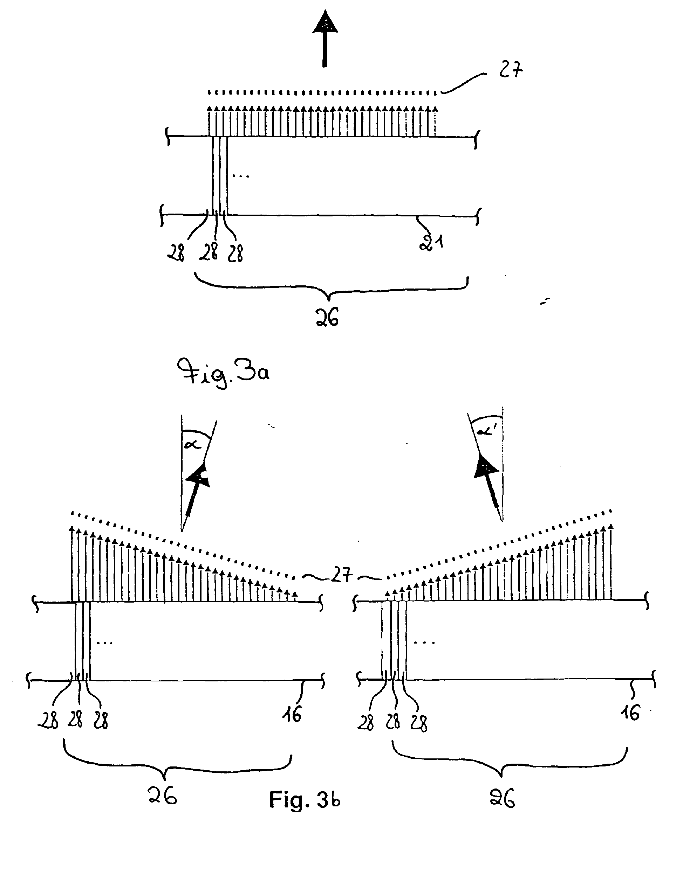

Figur 3a zeigt einen linearen Gruppenstrahler 16 (Sensorarray) aus einzelnen - einen virtuellen Sensor 26 bildende - Wandlerelementen 28, von denen nur einige exemplarisch gezeigt sind.

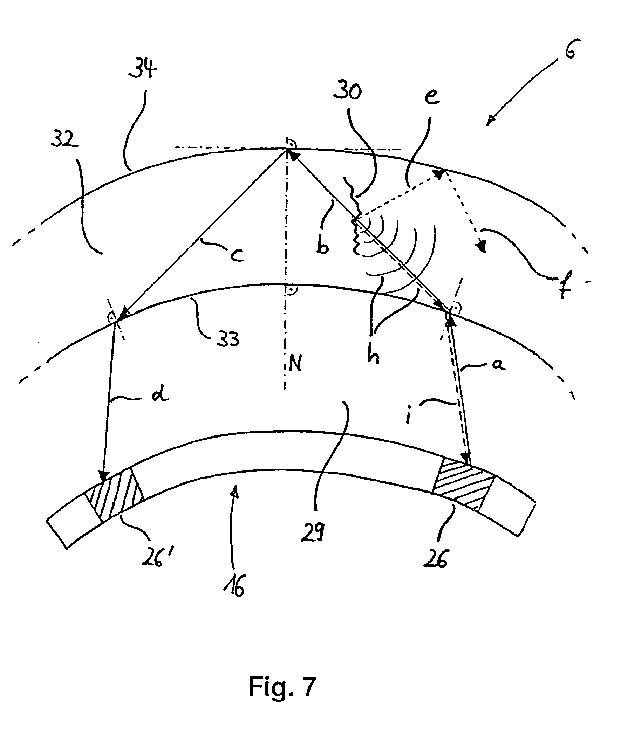

Wenn eine einen virtuellen Sensor 26 bildende Teilmenge (die auch alle Elemente 28 eines Gruppenstrahlers 16 umfassen kann) oder aber auch alle Wandlerelemente 28 eines solchen Gruppenstrahlers 16 zeitgleich angesteuert werden, entsteht eine ebene, sich senkrecht zum linearen Gruppenstrahler 16 ausbreitende Schallwellenfront 27, die sich in der gezeigten Ausführungsform aus den Abstrahlungen der einzelnen Wandlerelemente 28 zusammensetzt. Wird eine solche Schallwelle 27 längs einer in Figur 7 gezeigten Normalen N zur Rohrwandung 32 in diese eingestrahlt, so wird die Welle sowohl an der Innenwand 33 der Rohrleitung 6, als auch an der Außenwand 34 der Rohrleitung 6 reflektiert und ist im wesentlichen durch die gleichen aussendenden Wandlerelemente 28 nachweisbar (Puls- Echo-Verfahren). Eine gemessene Laufzeitdifferenz der beiden Reflektionssignale ermöglicht die Bestimmung der Dicke der Rohrwandung 32, wobei eine gegenüber einem Sollwert verminderte Wandungsdicke ein Zeichen für Korrosionsschäden darstellt.

Zum zuverlässigen Detektieren von Rissen, die in der Regel ein wesentliche radiale Erstreckungskomponente aufweisen, ist eine radiale Einstrahlung von Ultraschall in die Rohrwandung nicht geeignet. Hierzu muss eine geneigte Einstrahlung erfolgen.

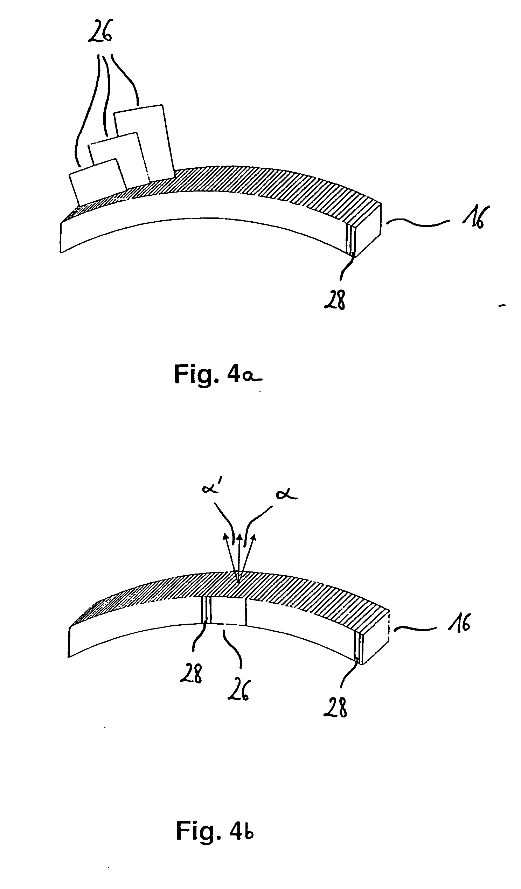

Figur 3b zeigt anhand von zwei Beispielen die Erzeugung einer schräg laufenden ebenen Wellenfront 27 mittels eines aus einzelnen Wandlerelementen 28 bestehenden virtuellen Sensors 26 eines linearen Sensorträgers 26. Wie aus Figur 3b ersichtlich ist, emittieren die virtuellen Sensoren 26 eine unter einem Winkel α nach rechts bzw. einem Winkel α' nach links laufende Welle 27, wenn die einzelnen Wandlerelemente 28 zeitlich versetzt zueinander angesteuert werden. Das zeitlich versetzte Ansteuern der Wandlerelemente 28 wird durch unterschiedlich lange Pfeile oberhalb der einzelnen Wandlerelemente 28 dargestellt, wobei die Länge der einzelnen Pfeile die seit dem Ansteuern des zugehörigen Wandlerelements 28 vergangene Zeit illustriert. Auch bei einem gekrümmten Sensorträger 16 (Fig. 4a ff.) erfolgt zur Erzeugung eines Schallwellenstrahls mit zum Radius (des gekrümmten Sensorträgers 16 bzw. der Rohrwandung) geneigter Einstrahlrichtung die Ansteuerung der einzelnen Sensorelemente 28 eines virtuellen Sensors 26 derart, dass ein Strahl mit minimaler Divergenz gebildet wird und die Wellenfront gerade bzw. eben ist, quasi die "Einzelstrahlen" einzelner Wandler also parallel verlaufen.

Zahlreiche Ansteuerungsvarianten der Wandlerelemente 28 sind möglich. Beispielsweise kann durch ein von den Rändern des virtuellen Sensors 26 zu ihrer Mitte hin fortschreitendes Ansteuern von Wandlerelementen 28 eine ineinander laufende, d.h. in einem gewissen Abstand zum Gruppenstrahler 16 fokussierende Wellenfront 27 generiert werden.

Figur 4a zeigt die Unterteilung eines erfindungsgemäßen Gruppenstrahlers 16, der eine einer Rohrwandung angepasste Krümmung aufweist, in mehrere Teilbereiche 26 - die virtuelle Sensoren -.

Die erfindungsgemäßen Gruppenstrahler 16 können beispielsweise aus 256 einzelnen Wandlerelementen 28 aufgebaut sein. Jeweils 32 solcher Wandlerelemente 28 bilden beispielsweise einen virtuellen Sensor 26, wobei die virtuellen Sensoren 26 sowohl eines Gruppenstrahlers 16 als auch zweier in Umfangrichtung aneinander anschließender oder nebeneinander in Umfangsrichtung versetzt angeordneter Gruppenstrahler 16 teilweise überlappen können, um eine ausreichende Auflösung in Umfangsrichtung zu erreichen, d.h. einzelne Wandlerelemente 28 können jeweils zwei virtuellen Sensoren zugeordnet werden.

Figur 4b zeigt noch einmal die bereits mittels Blick auf Figuren 3a und 3b diskutierte richtungsselektive Abstrahlung eines aus mehreren Wandlerelementen 28 eines Gruppenstrahlers 16 gebildeten virtuellen Sensors 26. An jeder Stelle eines Gruppenstrahlers 16 kann ein virtueller Sensor 26 gebildet werden, mit dem sich Ultraschallwellen unter beliebigen vorbestimmbaren Winkeln zu einer Normalen N der Rohrwandung in diese einstrahlen lassen. Beim gezeigten Ausführungsbeispiel erfolgt eine Einstrahlung unter einem Winkel von 0° sowie unter zwei von 0 verschiedenen Winkeln α, α'. Auf diese Weise sind die erfindungsgemäßen Gruppenstrahler 16 sowohl zur Wanddickenbestimmung nach dem Puls-Echo-Verfahren, als auch zur in Fig. 7 gezeigten Detektierung von Rissen (Durchschallungsverfahren) einsetzbar.

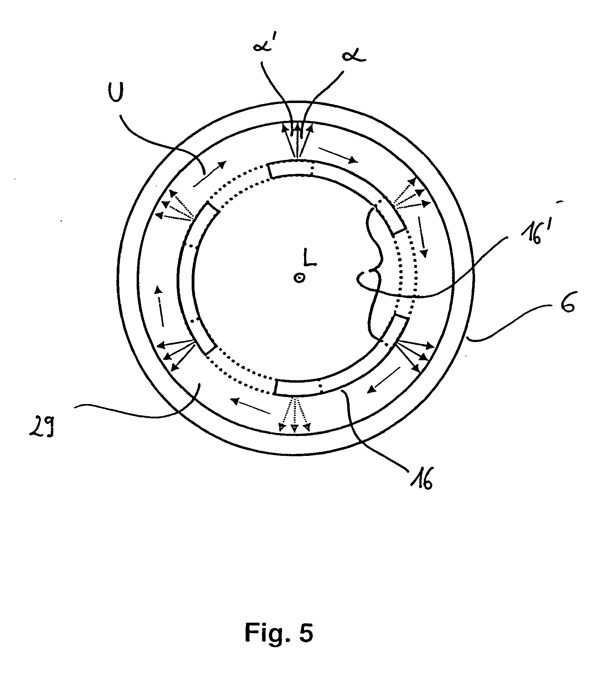

Figur 5 zeigt, wie mittels der anhand von Figur 2 beschriebenen Anordnung von Gruppenstrahlern 16, 16' eine vollständige Signalabdeckung der Rohrleitung 6 erreichbar ist. In Figur 5 ist unter anderem das Überlappen der Gruppenstrahler 16 der ersten Kreisanordnung mit den Gruppenstrahlern 16' der zweiten Kreisanordnung in Umfangsrichtung U erkennbar. Jeder der Gruppenstrahler 16, 16' sendet mittels eines Teilbereiches, d.h. eines virtuellen Sensors, zeitlich eng aufeinander folgend drei Ultraschallsignale unter den bereits mehrfach angesprochenen drei Einstrahlwinkeln 0°, α, α' aus, in der Regel derart, dass das Fortschreiten der Wellenfront in der Rohrleitung unter einem Winkel von 45° erfolgt, wobei also α' = -α ist. Die Einstrahlung erfolgt deswegen unter positiv und negativ zur Senkrechten geneigten Winkeln, da ein bei einer ersten (positiven) Einstrahlrichtung nicht erfassbarer Riss unmittelbar hinter einer Rohr-Schweißnaht sicher durch die (negativ) geneigte andere Einstrahlrichtung erfasst werden kann, da er sich dabei vor der Rohrschweißnaht befindet. Anschließend werden die virtuellen Sensoren in Umfangsrichtung in Richtung des Pfeils U um mindestens ein Wandlerelement 28 verschoben, woraufhin erneut jeweils drei Ultraschallsignale ausgesandt werden. Auf diese Weise erfolgt im Bereich der Gruppenstrahler 16,16' ein Abscannen der Rohrleitung 6 in Umfangsrichtung U, wodurch sich zusammen mit der angesprochenen Sensorüberlappung eine vollständige Signalabdeckung in Umfangsrichtung U ergibt. Wie aus Figur 5 ersichtlich, sind die Gruppenstrahler 16, 16' von der Rohrwandung beabstandet angeordnet, wobei der zwischen den Gruppenstrahlern 16, 16' und der Innenwand der Rohrleitung 6 verbleibende Freiraum 29 mit dem in der Rohrleitung 6 geförderten Medium gefüllt ist.

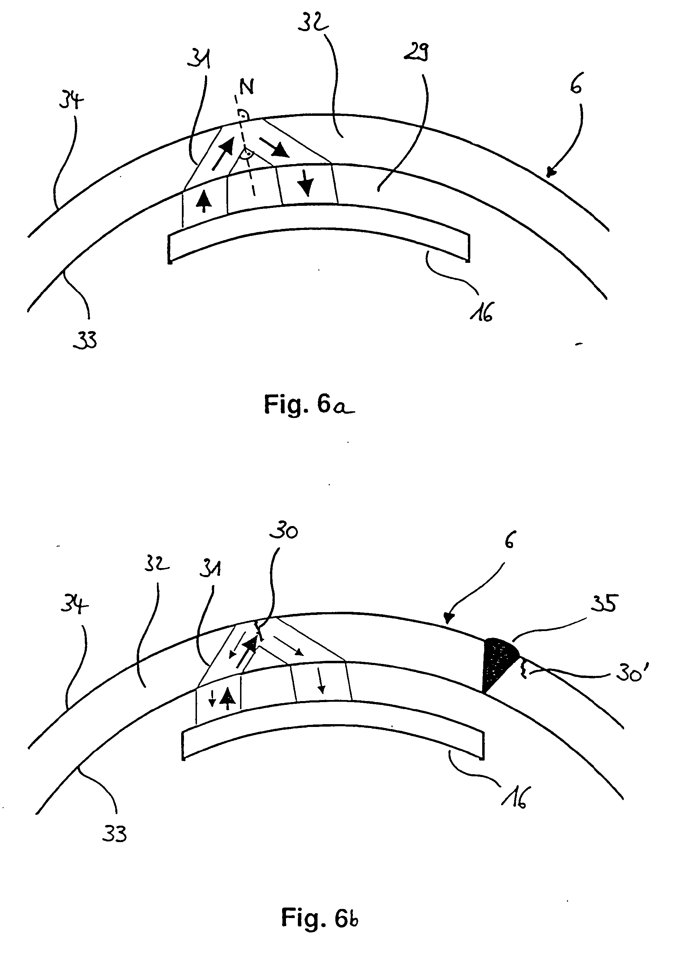

Figuren 6a und 6b verdeutlichen das erfindungsgemäße Verfahren zur Detektierung von Rissen 30 im Inneren der Rohrleitung 6.

Figur 6a zeigt schematisch den Schalllaufweg 31 in der Wandung 32 einer Rohrleitung 6. Ein Teilbereich (virtueller Sensor) eines innerhalb der Rohrleitung 6 angeordneten Gruppenstrahlers 16 strahlt eine Ultraschallwelle unter einem endlichen Winkel schräg zu einer Normalen N der Rohrwandung 32 in diese ein, so dass sich die Wellenfront nach einer ersten Brechung an der Innenwand 33 der Rohrleitung 6 unter einem Winkel von etwa 45° zur Normalen N in der Rohrwandung 32 ausbreitet. Dadurch ist sichergestellt, dass an der Außenwand 34 der Rohrleitung 6 im wesentlichen eine Totalreflektion der eingestrahlten Schallwelle erfolgt, so dass die gesamte eingestrahlte Energie in Richtung Innenwand 33 der Rohrleitung 6 zurückgestrahlt wird. An der Innenwand 33 wird die Schallwelle erneut gebrochen und trifft nach Durchquerung des Freiraums 29 in einem anderen Teilbereich auf den Gruppenstrahler 16, wo sie mit im wesentlichen der Ausstrahlungs-Intensität entsprechender Intensität detektierbar ist.

Figur 6b zeigt einen ähnlichen Sachverhalt wie Figur 6a, jedoch ist beim hier gezeigten Ausführungsbeispiel ein Riss 30 in der Nähe der Außenwand 34 der Rohrleitung 6 vorhanden. In diesem Fall wird ein Teil der analog zu Figur 6a eingestrahlten Schallenergie am Riss 30 reflektiert bzw. gebeugt und wird so im Bereich des emittierenden virtuellen Sensors des Gruppenstrahlers 16 nachgewiesen. Um auch Risse 30' detektieren zu können, die in für Ultraschallwellen schwer zugänglichen Bereichen, beispielsweise in der Nähe einer Rohrwandungsnaht 35 vorhanden sind, ist es notwendig, an jeder Stelle der Rohrwandung 32 eine Einstrahlung von beiden Seiten her vorzunehmen. Dies ist durch die erfindungsgemäße Geometrie der Einstrahlung und die überlappende Anordnung der Gruppenstrahler gewährleistet.

In Figur 7 ist die Wechselwirkung einer in die Rohrwandung 32 eingestrahlten Schallwelle a mit einem Riss 30 näher gezeigt. Der Strahlengang a-b-c-d von einem emittierenden virtuellen Sensor 26 entspricht des Gruppenstrahlers 16 zu einem virtuellen Sensor 26' im wesentlichen dem in Figur 6a gezeigten Schalllaufweg 31 (wobei jedoch in Abweichung zu Fig. 6 in Fig. 7 zeichnerisch die Signaleinstrahlung von rechts her dargestellt ist). Weist die Rohrleitung 6 einen Riss 30 auf, so gelangt nur ein Teil der eingestrahlten Schallwelle entlang des Laufweges a-b-c-d zum virtuellen Sensor 26', da ein Teil der Wellenenergie (e,f) an der Fehlstelle 30 gebeugt bzw. reflektiert wird. Dieser Anteil wird im dargestellten Ausführungsbeispiel nicht weiter erfasst. Der am Riss 30 gebeugte Anteil h der eingestrahlten Schallwelle gelangt aufgrund des der Figur 7 entnehmbaren Laufweges h-i zum Teilbereich 26 (virtueller Sensor) des Gruppenstrahlers 16.

Während zur Wanddickenmessung bei senkrechter Signaleinstrahlung in der Regel Longitudinalwellen verwendet werden, werden zur Durchstrahlung einer Rohrwandung 32 nach Figur 6a, 6b oder 7 auch Transversalwellen verwendet.

### Bezugszeichenliste

- 1: Molch
- 2,3,4: (Molch)Körper
- 5: Manschette
- 6: Rohrleitung
- 7: Rolle
- 8: Bewegungsrichtung des Molchs (1)
- 9: Untersuchungs-vorrichtung
- 10,10': Gelenk
- 11: Führungsscheibe
- 12: Randbereich
- 13: Mittelelement
- 14: Gelenkelement
- 15: Sensoraufhängung
- 16,16': Gruppenstrahler
- 17: Sensorkufe
- 18: Oberfläche der Sensorkufe (17)
- 19: Abstandshalter
- 20: Oberseite des Abstandhalters (19)
- 21: Nut
- 22,22': Gelenkarme
- 23: Drehgelenk
- 24: Befestigungselement
- 25: Teleskop-Federelement
- 26: virtueller Sensor
- 27: Schallwellenfront
- 28: Wandlerelement
- 29: Freiraum
- 30,30': Riss
- 31: Schalllaufweg
- 32: Rohrwandung
- 33: Innenwand
- 34: Außenwand
- 35: Rohrwandungsnaht

- L: (Längs-)Achse
- N: Rohrwandungs-Normale
- U: Umfangsrichtung

- α,α': Einstrahlwinkel

## Patentansprüche

1. Verfahren zum Prüfen von Rohrleitungen, insbesondere zum Detektieren von Fehlern in Rohrleitungen mittels Ultraschall, wobei während eines Laufs durch eine Rohrleitung Ultraschallsignale von Wandlerelementen in eine Rohrwandung ausgesandt und an verschiedenen Grenzflächen reflektierte Schallsignale zur Bestimmung von Fehlern der Rohrwandung ausgewertet werden, **dadurch gekennzeichnet, dass** aus einer Mehrzahl von in Umfangsrichtung der Rohrleitung im Wesentlichen kreisförmig aneinandergereihten Wandlerelementen gebildete Teilbereiche von mehreren in Umfangsrichtung hintereinander angeordneten, jeweils eine Vielzahl von Wandlerelementen aufweisenden physischen Gruppenstrahlern als virtuelle Sensoren Ultraschallsignale gemeinsam zumindest unter einer Einstrahlrichtung in die Rohrwandung eingestrahlt werden, dass sich die zeitlich nacheinander angesteuerten virtuellen Sensoren überlappen und dass durch dieselben und/oder andere Teilbereiche der jeweiligen Gruppenstrahler die an Grenzflächen der Rohrwandung reflektierten Signale empfangen werden.

2. Verfahren nach Anspruch 1, **dadurch gekennzeichnet, dass** ein Signalabstrahlungsabstand zwischen Rohrwandung und Gruppenstrahler während des Messlaufs im Wesentlichen konstant gehalten wird.

3. Verfahren nach Anspruch 1, **dadurch gekennzeichnet, dass** eine Richtung der Signalabstrahlung bezogen auf eine Normale der Rohrwandung bei schräger Signalabstrahlung derart gewählt wird, dass sich die Schallwelle nach Brechung an einer Grenzfläche zwischen Rohrinnenraum und Rohrwandung unter einem Winkel von ungefähr 45° bezogen auf die Rohrwandungs-Normale ausbreitet.

4. Verfahren nach einem der Ansprüche 1 bis 3, **dadurch gekennzeichnet, dass** ein Signal noch unter einem zweiten, gegenüber dem ersten Einstrahlwinkel an der Rohrwandungs-Normalen gespiegelten Winkel abgestrahlt wird.

5. Verfahren nach einem der Ansprüche 1 bis 4, **dadurch gekennzeichnet, dass** zur Abstrahlung von Signalen wiederholt nacheinander verschiedene Teilbereiche (virtuelle Sensoren) der Gruppenstrahler angesteuert werden, die sich insbesondere aus einer jeweils gleichen Anzahl von Wandlerelementen zusammensetzen, so dass scheinbar ein abstrahlender Teilbereich der Gruppenstrahler zeitlich längs des Gruppenstrahlers verschoben wird, bis alle Wandlerelemente jedes einzelnen Gruppenstrahlers wenigstens einmal aktiviert wurden.

6. Verfahren nach Anspruch 5, **dadurch gekennzeichnet, dass** Bereiche der Rohrwandung aus mindestens zwei Richtungen bestrahlt werden.

7. Verfahren nach einem der Ansprüche 1 bis 6, **dadurch gekennzeichnet, dass** durch die gesamte Abstrahlung aller Teilbereiche aller Gruppenstrahler eine vollständige Signalabdeckung der Rohrwandung in Umfangsrichtung erreicht wird.

8. Verfahren nach Anspruch 7, **dadurch gekennzeichnet, dass** sich die vollständige Signalabdeckung der Rohrwand in Umfangsrichtung aufgrund einer festen geometrischen Anordnung der Gruppenstrahler ergibt.

9. Verfahren nach Anspruch 9, **dadurch gekennzeichnet, dass** die Gruppenstrahler zum Erreichen der vollständigen Signalabdeckung der Rohrwand in Umfangsrichtung der Rohrleitung rotieren.

10. Vorrichtung zum Prüfen von Rohrleitungen, insbesondere mittels des Verfahrens gemäß einem der Ansprüche 1 bis 9, insbesondere als Teil eines durch eine Rohrleitung bewegten Geräts zum Durchfahren der Rohrleitung, mit wenigstens einem Sensorträger (15, 17) und mehreren im Wesentlichen kreisförmig um den Sensorträger (15, 17) herum angeordneten Wandlerelementen (28), **dadurch gekennzeichnet,**
- **dass** die Wanderelemente (28) in mehreren in Umfangsrichtung der Rohrleitung aneinandergereihten Gruppenstrahlern (16, 16') angeordnet sind, wobei die Gruppenstrahler (16, 16') eine Vielzahl von in Umfangsrichtung aneinandergereihte einzelne Wandlerelemente (28) aufweisen, und
- **dass** Teilbereiche der Gruppenstrahler (16, 16') bestehend aus einer Mehrzahl einzelner Wandlerelemente (28) als virtuelle Sensoren (26) zur Ausstrahlung von Ultraschallsignalen unter einem Einstrahlwinkel und dieselben und/oder andere Teilbereiche des Gruppenstrahlers (16, 16') zum Empfang der an Grenzflächen der Rohrwandung reflektierten Schallsignale gemeinsam ansteuerbar sind und wobei sich die virtuellen Sensoren (26) überlappen.

11. Vorrichtung nach Anspruch 10, **dadurch gekennzeichnet, dass** die Gruppenstrahler (16,16') eine individuell federnde Sensoraufhängung (15) zur Ankopplung an eine Innenwand (33) der Rohrleitung (6) aufweisen.

12. Vorrichtung nach Anspruch 11, **dadurch gekennzeichnet, dass** die einzelnen Wandlerelemente (28) eines Gruppenstrahlers (16,16') in Form einer linearen Aneinanderreihung oder eines linearen Arrays angeordnet sind.

13. Vorrichtung nach einem der Ansprüche 10 bis 12, **dadurch gekennzeichnet, dass** die Gruppenstrahler (16,16') in ihrer Erstreckungsrichtung in Umfangsrichtung eine an eine Krümmung der Rohrwandung (32) angepasste endliche Krümmung aufweisen.

14. Vorrichtung nach einem der Ansprüche 10 bis 13, **dadurch gekennzeichnet, dass** eine Mehrzahl von Gruppenstrahlern (16,16') als Gruppe in Umfangrichtung (U) voneinander beabstandet bei einer gemeinsamen axialen Position angeordnet sind.

15. Vorrichtung nach Anspruch 14, **dadurch gekennzeichnet, dass** die Wandlerelemente (28) einer Gruppe von Gruppenstrahlern (16,16') auf einem zu einem Innenumfang der Rohrwandung (32) konzentrischen Kreis angeordnet sind.

16. Vorrichtung nach Anspruch 15, **dadurch gekennzeichnet, dass** die Gruppenstrahler (16,16') in Umfangsrichtung (U) längs des zum Innenumfang der Rohrwandung (32) konzentrischen Kreises rotierbar sind.

17. Vorrichtung nach Anspruch 14 oder 15, **dadurch gekennzeichnet, dass** eine Mehrzahl von auch in axialer Richtung gegeneinander versetzten Gruppen von Gruppenstrahlern (16,16') vorgesehen ist, die sich in Umfangsrichtung (U) teilweise überlappen.

18. Vorrichtung nach einem der Ansprüche 10 bis 17, **dadurch gekennzeichnet, dass** durch eine geeignete zeitlich versetzte Ansteuerung zwischen einer Teilmenge (virtueller Sensor (26)) einzelner Wandlerelemente (28) eines Gruppenstrahlers (16,16') eine Ausbreitungsrichtung und/oder eine Fokussierungstiefe eines Messimpulses in Umfangsrichtung (U) bzw. in radialer Richtung veränderbar ist.

19. Vorrichtung nach einem der Ansprüche 10 bis 18, **dadurch gekennzeichnet, dass** der Sensorträger wenigstens ein koaxial zu den Gruppenstrahlern (16,16') angeordnetes, ihrer Befestigung dienendes zentrales kreiszylinderförmiges Mittelelement (13) aufweist.

20. Vorrichtung nach einem der Ansprüche 10 bis 19, **gekennzeichnet durch** eine konzentrisch zu einer Längsachse (L) angeordnete, zumindest in ihrem Randbereich (12) flexible Führungsscheibe (11) mit kreisförmigem Querschnitt, deren größter Durchmesser einem Innendurchmesser der Rohrleitung (6) entspricht oder diesen leicht übersteigt.

21. Vorrichtung nach Anspruch 20, **dadurch gekennzeichnet, dass** die Führungsscheibe (11) aus Kunststoff, insbesondere aus Polyurethan besteht.

22. Vorrichtung nach einem der Ansprüche 10 bis 21, **dadurch gekennzeichnet, dass** die Aufhängung (15) der einzelnen Gruppenstrahler (16,16') mindestens zwei Gelenkarme (22,22') aufweist, die miteinander in gelenkiger Verbindung stehen und die mit ihrem jeweils freien Ende an einem Befestigungselement (24) einer den Gruppenstrahler (16,16') aufnehmenden Sensorkufe (17) bzw. am Mittelelement (13) des Sensorträgers angelenkt sind.

23. Vorrichtung nach Anspruch 22, **dadurch gekennzeichnet, dass** die Gelenkverbindungen als Drehgelenke (23) ausgebildet sind.

24. Vorrichtung nach Anspruch 22 oder 23, **dadurch gekennzeichnet, dass** der am Mittelelement (13) angelenkte Gelenkarm (22') als Teleskop-Federelement ausgebildet ist.

25. Vorrichtung nach einem der Ansprüche 22 bis 24, **dadurch gekennzeichnet, dass** zwischen Sensorkufe (17) und Elementen (22,22',23) der Sensoraufhängung (15) ein weiteres Teleskop-Federelement (25) angeordnet ist.

26. Vorrichtung nach einem der Ansprüche 22 bis 25, **dadurch gekennzeichnet, dass** die Sensorkufen (17) derart ausgebildet sind, dass eine Krümmung ihrer der Rohrwandung (32) zugewandten Oberfläche (18) in Umfangsrichtung (U) im wesentlichen der Krümmung der Gruppenstrahler (16,16') entspricht.

27. Vorrichtung nach Anspruch 26, **dadurch gekennzeichnet, dass** die Gruppenstrahler (16,16') in eine in Umfangsrichtung (U) verlaufende Nut (21) in der Oberfläche (18) der Sensorkufen (17) eingepasst sind, wobei die Tiefe der Nut (21) im wesentlichen einer Abmessung der Gruppenstrahler (16,16') in radialer Richtung entspricht.

28. Vorrichtung nach Anspruch 27, **dadurch gekennzeichnet, dass** die Sensorkufen (17) gegenüber einer axialen Abmessung der Gruppenstrahler (16,16') ein Übermaß besitzen.

29. Vorrichtung nach Anspruch 28, **dadurch gekennzeichnet, dass** im Bereich des axialen Übermaßes Abstandshalter (19) auf den Sensorkufen (17) angeordnet sind.

30. Vorrichtung nach Anspruch 29, **dadurch gekennzeichnet, dass** die Abstandshalter (19) auf ihrer der Rohrwandung (32) zugewandten Oberseite (20) einen Verschleißschutz aufweisen.

## Claims

1. A method for testing pipelines, in particular for detecting faults in pipelines, by means of ultrasound, wherein, whilst during passage through a pipe, ultrasonic signals from transformer elements are transmitted into a pipe wall and sound signals reflected on different boundary regions are evaluated to determine faults in the pipe wall, **characterised in that** ultrasonic signals are irradiated into the pipe wall together, in at least one direction of irradiation, from a multiplicity of partial regions of a plurality of physical group radiators, as virtual sensors, arranged behind each other in the circumferential direction and each having a multiplicity of transformer elements, which partial regions are formed from a multiplicity of transformer elements arranged substantially circularly in rows in the circumferential direction of the pipeline, **in that** the virtual sensors that are actuated one after the other in time overlap each other, and **in that** the signals reflected on boundary regions of the pipe wall are received by the same and/or other partial regions of the respective group radiators.

2. The method according to Claim 1, **characterised in that** a signal radiation distance is kept substantially constant between the pipe wall and the group radiator during the measuring run.

3. The method according to Claim 1, **characterised in that** a direction of the signal direction related to a perpendicular of the pipe wall in oblique signal radiation is chosen so that the sound wave is propagated at an angle of approximately 45° related to the pipe wall perpendicular after refraction on a boundary region between the pipe interior and the pipe wall.

4. The method according to any one of Claims 1 to 3, **characterised in that** a signal is also radiated at a second angle reflected on the pipe wall perpendicular relative to the first angle of irradiation.

5. The method according to any one of Claims 1 to 4, **characterised in that** for the radiation of signals different partial regions (virtual sensors) of the group radiators are actuated repeatedly one after the other, wherein said group radiators consist particularly of the same number of transformer elements so that a radiating partial region of the group radiators is apparently displaced temporarily along the group radiator until all the transformer elements of each individual group radiator have been activated at least once.

6. The method according to Claim 5, **characterised in that** regions of the pipe wall are irradiated from at least two directions.

7. The method according to one of Claims 1 to 6, **characterised in that** complete signal coverage of the pipe wall in the circumferential direction is achieved throughout the radiation of all the partial regions of all the group radiators.

8. The method according to Claim 7, **characterised in that** the complete signal coverage of the pipe wall in the circumferential direction is achieved as a result of a fixed geometric arrangement of the group radiators.

9. The method according to Claim 8, **characterised in that** the group radiators rotate to achieve complete signal coverage of the pipe wall in the circumferential direction of the pipeline.

10. A device for testing pipelines, in particular by a method according to any one of Claims 1 to 9, in particular as part of a device moved through a pipeline for passing through the pipeline, with at least one sensor support (15, 17) and a plurality of transformer elements (28) arranged circularly around the sensor support (15, 17), **characterised in that**
- the transformer elements (18) are arranged in a plurality of group radiators (16, 16') one after the other in the circumferential direction of the pipeline, wherein the group radiators (16, 16') have a multiplicity of individual transformer elements (28) arranged one after the other in the circumferential direction, and
- partial regions of the group radiators (16, 16'), consisting of a multiplicity of individual transformer elements (18), as virtual sensors (26), may be actuated together for the transmission of ultrasonic signals at an irradiation angle and the same and/or other partial regions of the group radiator (16, 16') can be actuated to receive the sound signals reflected on boundary regions of the pipe wall, wherein the virtual sensors (26) overlap.

11. The device according to Claim 10, **characterised in that** the group radiators (16, 16') have an individually sprung sensor suspension (16) for coupling to an inner wall (33) of the pipeline (6).

12. The device according to Claim 11, **characterised in that** the individual transformer elements (28) of a group radiator (16, 16') are arranged in the form of a linear string or a linear array.

13. The device according to any one of Claims 10 to 12, **characterised in that** the group radiators (16, 16') have in their direction of extension, and in the circumferential direction, a finite curvature adapted to a curvature of the pipe wall (32).

14. The device according to any one of Claims 10 to 13, **characterised in that** a multiplicity of group radiators (16, 16') are arranged as a group in the circumferential direction (U), at a certain distance from each other and in a common axial position.

15. The device according to Claim 14, **characterised in that** the transformer elements (28) of a group of group radiators (16, 16') are arranged in a circle concentric to an inner circumference of the pipe wall (32).

16. The device according to Claim 15, **characterised in that** the group radiators (16, 16') can be rotated in the circumferential direction (U) along the circle concentric to the inner circumference of the pipe wall (32).

17. The device according to Claim 14 or 15, **characterised in that** a multiplicity of groups of group radiators (16, 16') is provided which is also offset against each other in the axial direction, which groups partially overlap in the circumferential direction (U).

18. The device according to any one of Claims 10 to 17, **characterised in that** a direction of propagation and/or a depth of focussing of a measuring pulse is variable in the circumferential direction (U) or in the radial direction by suitable staggered actuation between a partial quantity (virtual sensor (26)) of individual transformer elements (28).

19. The device according to any one of Claims 10 to 18, **characterised in that** the sensor support has at least one central element (13) circular-cylindrical in shape arranged coaxially to the group radiators (16, 16') and serving to fasten them.

20. The device according to any one of Claims 10 to 19, **characterised by** a guide plate (11) that is arranged concentrically to a longitudinal axis (L) and is flexible, at least in its edge region (12), with a circular cross-section whose largest diameter is equal to an inside diameter of the pipeline (6) or slightly exceeds it.

21. The device according to Claim 20, **characterised in that** the guide plate (11) consists of plastic, in particular of polyurethane.

22. The device according to any one of Claims 10 to 21, **characterised in that** the suspension (15) of the individual group radiators (16, 16') has at least two articulated arms (22, 22') which are articulated to each other and which are articulated with each of their free ends to a fastening element (24) of a sensor runner (17) receiving the group radiator (16, 16') or to the central element (13) of the sensor support.

23. The device according to Claim 22, **characterised in that** the articulated connections are designed as swivels (23).

24. The device according to Claim 22 or 23, **characterised in that** the articulated arm (22') articulated to the central element (13) is designed as a telescopic spring element.

25. The device according to any one of Claims 22 to 24, **characterised in that** a further telescopic spring element (25) is arranged between the sensor runner (17) and elements (22, 22', 23) of the sensor suspension (15).

26. The device according to any one of Claims 22 to 25, **characterised in that** the sensor runners (17) are designed so that a curvature of their surface (18) facing the pipe wall (32) in the circumferential direction (8) corresponds substantially to the curvature of the group radiators (16, 16').

27. The device according to Claim 26, **characterised in that** the group radiators (16, 16') are fitted into a groove (21) running in the circumferential direction (U) in the surface (18) of the sensor runners (17), wherein the depth of the groove (21) is essentially equal to a dimension of the group radiators (16, 16') in the radial direction.

28. The device according to Claim 27, **characterised in that** the sensor runners (17) are over-dimensioned relative to an axial dimension of the group radiators (16, 16').

29. The device according to Claim 28, **characterised in that** spacers (19) are arranged on the sensor runners (17) in the region of the axial over-dimension.

30. The device according to Claim 29, **characterised in that** the spacers (19) have wearing protection on their upper side (20) facing the pipe wall (32).

## Revendications

1. Procédé pour examiner des conduites tubulaires, notamment pour détecter des défauts dans des conduites tubulaires à l'aide d'ultrasons, des signaux ultrasonores étant envoyés dans une paroi de tube par des éléments de convertisseur pendant un passage à travers une conduite tubulaire et les signaux acoustiques se réfléchissant au niveau de différentes surfaces limites étant analysés pour déterminer des défauts de la paroi de tube, **caractérisé en ce que** des signaux ultrasonores sont émis ensemble dans la paroi de tube au moins dans une direction de rayonnement par le biais de plusieurs antennes groupées physiques comportant respectivement une pluralité d'éléments de convertisseur, disposées les unes derrière les autres dans la direction circonférentielle et prenant la forme de capteurs virtuels, parmi une pluralité de zones partielles constituées par des éléments de convertisseur alignés pour l'essentiel en cercle dans la direction circonférentielle de la conduite tubulaire, que les capteurs virtuels commandés les uns après les autres dans le temps se chevauchent et que les signaux réfléchis au niveau des surfaces limites de la paroi de tube sont reçus par ces zones partielles et/ou par d'autres zones partielles des antennes groupées respectives.

2. Procédé selon la revendication 1, **caractérisé en ce qu'**un écart de rayonnement du signal est maintenu pour l'essentiel à niveau constant entre la paroi de tube et l'antenne groupée pendant le déroulement de la mesure.

3. Procédé selon la revendication 1, **caractérisé en ce qu'**une direction du rayonnement du signal est choisie par rapport à une normale de la paroi de tube en présence d'un rayonnement oblique du signal de telle sorte que l'onde acoustique se propage après rupture au niveau d'une surface limite prévue entre l'espace intérieur de tube et la paroi de tube selon un angle d'environ 45° par rapport à la normale de la paroi de tube.

4. Procédé selon l'une quelconque des revendications 1 à 3, **caractérisé en ce qu'**un signal est encore envoyé selon un deuxième angle réfléchi au niveau des normales de paroi de tube par rapport au premier angle de rayonnement.

5. Procédé selon l'une quelconque des revendications 1 à 4, **caractérisé en ce que** différentes zones partielles (capteurs virtuels) des antennes groupées sont commandées les unes après les autres de façon répétée pour provoquer l'envoi de signaux, lesdites antennes se composant notamment d'un nombre respectivement identique d'éléments de convertisseur, de sorte qu'une zone partielle émettrice des antennes groupées est décalée de façon visible dans le temps le long de l'antenne groupée, jusqu'à ce que tous les éléments de convertisseur de chaque antenne groupée individuelle aient été activés au moins une fois.

6. Procédé selon la revendication 5, **caractérisé en ce que** les zones de la paroi de tube sont irradiées depuis au moins deux directions.

7. Procédé selon l'une quelconque des revendications 1 à 6, **caractérisé en ce qu'**un recouvrement entier du signal de la paroi de tube est atteint dans la direction circonférentielle grâce à l'ensemble du rayonnement de toutes les zones partielles de toutes les antennes groupées.

8. Procédé selon la revendication 7, **caractérisé en ce que** le recouvrement de signal entier de la paroi de tube se produit dans la direction circonférentielle en raison d'un agencement géométrique fixe des antennes groupées.

9. Procédé selon la revendication 9, **caractérisé en ce que** les antennes groupées tournent pour permettre un recouvrement entier du signal de la paroi de tube dans la direction circonférentielle de la conduite tubulaire.

10. Dispositif pour examiner des conduites tubulaires, notamment à l'aide du procédé selon l'une quelconque des revendications 1 à 9, notamment comme partie intégrante d'un appareil déplacé à travers une conduite tubulaire pour traverser la conduite tubulaire, avec au moins un support de capteur (15, 17) et plusieurs éléments de convertisseur (28) disposés pour l'essentiel en cercle autour du support de capteur (15, 17), **caractérisé en ce que** :
- les éléments de paroi (28) sont disposés dans plusieurs antennes groupées (16, 16') alignées dans la direction circonférentielle de la conduite tubulaire, les antennes groupées (16, 16') comportant une pluralité d'éléments de convertisseur (28) individuels alignés dans la direction circonférentielle ; et
- les zones partielles des antennes groupées (16, 16') se composant d'une pluralité d'éléments de convertisseur (28) individuels prenant la forme de capteurs virtuels (26) pour émettre des signaux ultrasonores selon un angle de rayonnement et lesdites zones partielles et/ou d'autres zones partielles de l'antenne groupée (16, 16') peuvent être commandées pour recevoir ensemble les signaux acoustiques réfléchis au niveau des surfaces limites de la paroi de tube, les capteurs virtuels (26) se chevauchant.

11. Dispositif selon la revendication 10, **caractérisé en ce que** les antennes groupées (16, 16') comportent une attache de capteur (15) montée sur un ressort individuel pour l'accouplement à une paroi intérieure (33) de la conduite tubulaire (6).

12. Dispositif selon la revendication 11, **caractérisé en ce que** les éléments de convertisseur (28) individuels d'une antenne groupée (16, 16') sont disposés sous la forme d'une succession linéaire ou d'une rangée linéaire.

13. Dispositif selon l'une quelconque des revendications 10 à 12, **caractérisé en ce que** les antennes groupées (16, 16') comportent dans leur direction d'extension dans la direction circonférentielle un coude final adapté à un coude de la paroi de tube (32).

14. Dispositif selon l'une quelconque des revendications 10 à 13, **caractérisé en ce qu'**une pluralité d'antennes groupées (16, 16') sont disposées sous la forme d'un groupe dans la direction périphérique (U) de façon à être espacées les unes des autres selon une position axiale commune.

15. Dispositif selon la revendication 14, **caractérisé en ce que** les éléments de convertisseur (28) d'un groupe d'antennes groupées (16, 16') sont disposés sur un cercle concentrique par rapport à un périmètre intérieur de la paroi de tube (32).

16. Dispositif selon la revendication 15, **caractérisé en ce que** les antennes groupées (16, 16') peuvent être tournées dans la direction circonférentielle (U) le long du cercle concentrique par rapport au périmètre intérieur de la paroi de tube (32).

17. Dispositif selon la revendication 14 ou 15, **caractérisé en ce qu'**une pluralité de groupes d'antennes groupées (16, 16') également décalés dans la direction axiale les uns par rapport aux autres sont prévus, lesdits groupes se chevauchant en partie dans la direction circonférentielle (U).

18. Dispositif selon l'une quelconque des revendications 10 à 17, **caractérisé en ce qu'**une direction de diffusion et/ou une profondeur de focalisation d'une impulsion de mesure peuvent être modifiées dans la direction circonférentielle (U) et/ou dans la direction radiale par le biais d'une commande adaptée décalée dans le temps entre une quantité partielle (capteur virtuel (26)) des éléments de convertisseur (28) individuels d'une antenne groupée (16, 16').

19. Dispositif selon l'une quelconque des revendications 10 à 18, **caractérisé en ce que** le support de capteur comporte au moins un élément central (13) de forme circulaire et cylindrique central servant de fixation et disposé coaxialement par rapport aux antennes groupées (16, 16').

20. Dispositif selon l'une quelconque des revendications 10 à 19, **caractérisé par** un disque de guidage (11) disposé de façon concentrique par rapport à un axe longitudinal (L) et flexible au moins dans sa zone de bordure (12) avec une section transversale circulaire dont le plus grand diamètre est égal ou légèrement supérieur au diamètre intérieur de la conduite tubulaire (6).

21. Dispositif selon la revendication 20, **caractérisé en ce que** le disque de guidage (11) est en matière synthétique, notamment en polyuréthane.

22. Dispositif selon l'une quelconque des revendications 10 à 21, **caractérisé en ce que** l'attache (15) des antennes groupées (16, 16') individuelles comporte au moins deux bras articulés (22, 22') reliés entre eux de façon articulée et articulés avec leur extrémité respectivement libre à un élément de fixation (24) d'une lame de capteur (17) logeant les antennes groupées (16, 16') et/ou à l'élément central (13) du support de capteur.

23. Dispositif selon la revendication 22, **caractérisé en ce que** les jonctions articulées prennent la forme d'articulations pivotantes (23).

24. Dispositif selon la revendication 22 ou 23, **caractérisé en ce que** le bras articulé (22') articulé au niveau de l'élément central (13) prend la forme d'un élément de ressort télescopique.

25. Dispositif selon l'une quelconque des revendications 22 à 24, **caractérisé en ce qu'**un autre élément de ressort (25) télescopique est disposé entre la lame de capteur (17) et les éléments (22, 22', 23) de l'attache de capteur (15).

26. Dispositif selon l'une quelconque des revendications 22 à 25, **caractérisé en ce que** les lames de capteur (17) sont réalisées de telle sorte qu'un coude de leur surface (18) orientée vers la paroi de tube (32) dans la direction circonférentielle (U) correspond pour l'essentiel au coude des antennes groupées (16, 16').

27. Dispositif selon la revendication 26, **caractérisé en ce que** les antennes groupées (16, 16') sont encastrées dans une rainure (21) s'étendant dans la direction circonférentielle (U) dans la surface (18) des lames de capteur (17), la profondeur de la rainure (21) correspondant pour l'essentiel à une dimension des antennes groupées (16, 16') dans la direction radiale.

28. Dispositif selon la revendication 27, **caractérisé en ce que** les lames de capteur (17) possèdent une surmesure par rapport à une dimension axiale des antennes groupées (16, 16').

29. Dispositif selon la revendication 28, **caractérisé en ce que** des bloqueurs d'écartement (19) sont disposés sur les lames de capteur (17) dans la zone de la surmesure axiale.

30. Dispositif selon la revendication 29, **caractérisé en ce que** les bloqueurs d'écartement (19) comportent une protection antiusure sur leur côté supérieur (20) orienté vers la paroi de tube (32).
